Europäisches Patentamt

European Patent Office

Office européen des brevets

(19)

(11) Veröffentlichungsnummer : **0 052 393**
**B1**

# (12) EUROPÄISCHE PATENTSCHRIFT

(45) Veröffentlichungstag der Patentschrift :
09.01.85

(21) Anmeldenummer : 81201208.6

(22) Anmeldetag : 29.10.81

(51) Int. Cl.⁴ : **G 11 B 15/66**, G 11 B 15/18,
G 11 B 25/06

(54) **Magnetbandkassettengerät mit mindestens zwei Drucktasten.**

(30) Priorität : 13.11.80 DE 3042745

(43) Veröffentlichungstag der Anmeldung :
26.05.82 Patentblatt 82/21

(45) Bekanntmachung des Hinweises auf die Patenterteilung : 09.01.85 Patentblatt 85/02

(84) Benannte Vertragsstaaten :
DE FR GB IT

(56) Entgegenhaltungen :
GB-A- 1 493 417
GB-A- 2 018 001
GB-A- 2 034 098
GRUNDIG Prospekt für das Auto-Cassetten-Tonbandgerät Typ AC 125

(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**FR GB IT**

(72) Erfinder : **Kommoss, Klaus**
**Am Rabenbaum 26**
**D-6330 Wetzlar-Naunheim (DE)**
Erfinder : **Schütte, Heinz**
**Formerstrasse 33**
**D-6330 Wetzlar (DE)**

(74) Vertreter : **Kupfermann, Fritz-Joachim et al**
**Philips Patentverwaltung GmbH Billstrasse 80 Post-**
**fach 10 51 49**
**D-2000 Hamburg 28 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 052 393 B1

**Beschreibung**

Die Erfindung bezieht sich auf ein Magnetbandkassettengerät mit mindestens zwei Drucktasten, die beim Eindrücken ihrer sich überdeckenden Tastenstangen über die Länge eines Hubweges für Einzelfunktion zugeordneter Geräteteile unterschiedliche Einzelfunktionen ausüben und verriegelbar sind, und mit einer eine Kassette aufnehmenden Kassettenaufnahme, aus der die Kassette auswerfbar ist durch gemeinsames Eindrücken beider Drucktasten, wozu eine Klinke, die bei Einzelfunktion die jeweils eingedrückte Drucktaste verriegelt, bei gemeinsamem Eindrücken verschwenkt wird zum Ausüben einer dritten Funktion.

Ein Magnetbandkassettengerät dieser Art ist von dem Grundig-Autokassettenspieler Typ AC 125 bekannt. Jeder Drucktaste ist beim Eindrücken eine bestimmte Gerätefunktion, und zwar schneller Vor- bzw. schneller Rücklauf zugeordnet. Die Tastenstangen arbeiten zusammen mit einer Klinke, die bei Einzelfunktion jede Taste in der Einschub-, d. h. Funktionsstellung für schnellen Vor- oder Rücklauf, verriegelt. Die Klinke bildet aber keinen Anschlag für die Drucktaste aus, wodurch beim Eindrücken zur Einzelfunktion ein gewisser undefinierter Überhub möglich ist. Die dritte Funktion bei gemeinsamem Eindrücken beider Tasten läßt sich wegen der Unbestimmtheit des Überhubes funktionell nur im Bereich des normalen Hubes, d. h. nur im Bereich des Antriebsmechanismus des Gerätes unterbringen. Bei kleiner werdenden Geräteabmessungen steht der für die dritte Funktion im Bereich normalen Hubweges erforderliche Raum für den mechanischen Funktionsaufbau nicht zur Verfügung. Dies gilt insbesondere, wenn ein Kassettengerät mit einem Autorundfunkgerät kombiniert werden soll.

Es ist Aufgabe der Erfindung, bei einem Magnetbandkassettengerät der eingangs erwähnten Art den Tastenmechanismus derart auszubilden, daß er im Bereich der Gerätevorderseite möglichst schmal gehalten ist und daß der Funktionsmechanismus möglichst nach hinten verlegt ist.

Die gestellte Aufgabe ist erfindungsgemäß dadurch gelöst, daß

— zur Funktionsübertragung zwischen den Tastenstangen und dem Geräteteil wenigstens ein Fahrstift und sich überdeckende Leitkonturen vorgesehen sind,

— beim Verschieben der Tastenstangen durch das Zusammenwirken von Fahrstift und wenigstens einer der Leitkonturen die Klinke verschwenkt wird,

— die Klinke beim Eindrücken einer Drucktaste zum Ausführen einer Einzelfunktion den Hubweg der betreffenden Tastenstange beschränkt und bei gemeinsamem Einschieben beider Tastenstangen derartig von Leitkonturen verschwenkt wird, daß die Tastenstangen einen gemeinsamen Überhubweg durchfahren können.

Diese Konstruktion macht es möglich, die Klinke nach hinten zu verlegen, wodurch die Breite der Tastenmechanik im Bereich der Antriebsfunktion auf die Tastenbreite beschränkt werden kann. Im hinteren Bereich kann die Klinke dann bei im allgemeinen größerem Raumangebot mehrere Funktionen steuern, und zwar das Verstellen der Kopfplatte mit den Andruckrollen, das Trennen der Kassette vom Antrieb und das Entriegeln des Auswerfbügels. Dabei beschränkt die Klinke bei Einzelfunktion, d. h. bei Schnellspulvorgängen, den Hubweg der Tasten, um einen definierten gemeinsamen Überhubweg für beide Tasten zu ermöglichen.

Als wesentlicher Vorteil kommt noch hinzu, daß ein versehentliches Auswerfen unterbunden ist. Ein versehentliches Auswerfen ist bei dem bekannten Gerät dadurch möglich, daß statt nur einer Taste versehentlich beide Tasten eingedrückt werden. Da dann bereits die Auswerffunktion in Gang gesetzt wird, kann also beim Eindrücken im Bereich des normalen Hubweges bereits ein Auswurf erfolgen. Durch die Einführung des Überhubweges ist das versehentliche Auswerfen unterbunden. Der Benutzer muß mit Bewußtsein beide Tasten über den normalen Hubweg hinaus tiefer bzw. weiter eindrücken.

Die Tastenmechanik des Gerätes läßt sich auf verschiedene Weise verwirklichen. Eine Ausführungsform der Erfindung ist dadurch gekennzeichnet, daß

— die Leitkonturen mit Ausbuchtungen versehen sind, die beim Einzelverschieben der Tastenstangen von den in einer Linie beiderseits der Ausbuchtungen befindlichen Teilstücken verschlossen sind,

— einer der Fahrstifte bei gemeinsamem Verschieben der Tastenstangen in die geöffneten Ausbuchtungen einläuft, wodurch die vorgespannte Klinke verschwenkt zur Freigabe eines längeren gemeinsamen Überhubweges beider Tastenstangen.

Bei dieser Ausführungsform sind die Leitkonturen in die Tasten und ist der Fahrstift in die Klinke gelegt. Dabei sind die Leitkonturen, da die Tastenstangen üblicherweise aus Metall gefertigt sind, als Ausdrückungen ausgebildet.

Eine weitere Ausführungsform der Erfindung ist dadurch gekennzeichnet, daß die Klinke mit deckungsgleichen Leitkonturen versehen ist, die von an den Tastenstangen angeordneten Fahrstiften verschwenkt werden. Bei dieser Ausführungsform sind die Leitkonturen in die Klinke gelegt, die von Fahrstiften der Tasten verschwenkt wird. Die Klinke mit ihren Konturen kann damit als Kunststofformspritzteil ausgebildet sein.

Die Erfindung wird anhand des in der Zeichnung dargestellten Ausführungsbeispieles näher erläutert. Es zeigen:

Figur 1 ein Gerät mit dem Verriegelungsmechanismus zweier Drucktasten in schaubildlicher Darstellung,

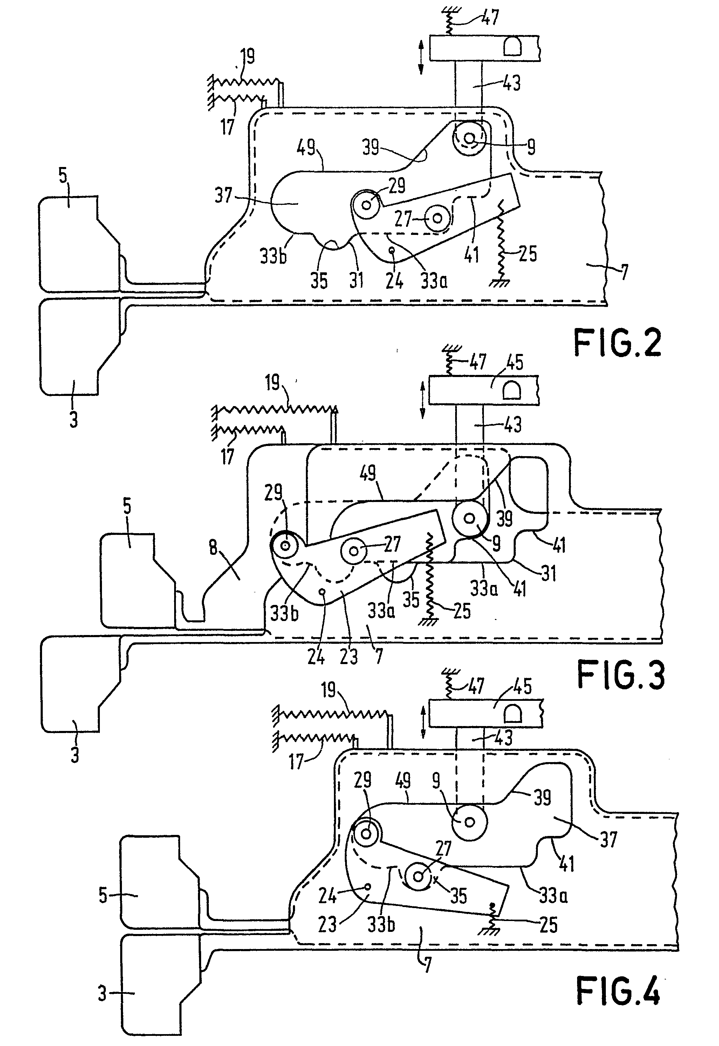

Figuren 2 bis 4 den gegenseitigen Verriegelungsmechanismus der zwei Drucktasten in den Funtionsstellungen, Ruhe- und Ausgangsstellung, Hub für Einzelfunktion und Überhub für die gemeinsame Doppelfunktion,

Figur 5 eine zweite Ausführungsform eines Gerätes nach der Erfindung mit dem Verriegelungsmechanismus zweier Drucktasten in schaubildlicher Darstellung in Ruhelage,

Figuren 6 bis 8 eine Ansicht des Verriegelungsmechanismus der zwei Drucktasten nach Fig. 5 in den Funktionsstellungen Kassetten-Einschubstellung, Abspielstellung bzw. Stellung für schnellen Vorlauf,

Figur 9 eine schematische Darstellung der Bewegungen bzw. verschiedenen Stellungen des Verriegelungsmechanismus, insbesondere bei gleichzeitigem Eindrücken beider Drucktasten.

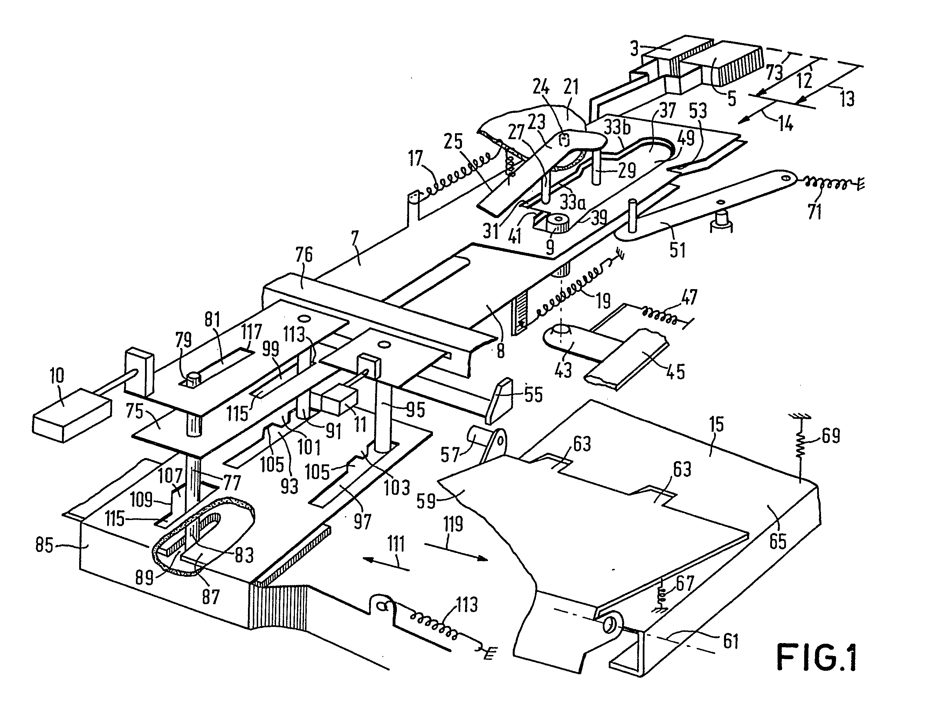

Fig. 1 zeigt in schaubildlicher Darstellung die Funktionsweise von zwei einzeln oder auch gemeinsam eindrückbaren Drucktasten 3 und 5. Die Drucktasten 3 und 5 sind an Tastenstangen 7 und 8 befestigt. Beim Einzeleindrücken der Drucktasten 3 oder 5 werden jeweils zwei Funktionen ausgeübt. Die eine Funktion ist das Abheben des Kopfschiebers mit Tonkopf und Andruckrollen für die Tonwellen von dem Band und den Tonwellen. Dieses Abheben erfolgt mit Hilfe einer später zu erläuternden Abhebekontur geführten Mitnehmerrolle 9. Diese Funktion wird beim Eindrücken jeder Drucktaste ausgeführt. Den einzelnen Drucktastenstangen 7 und 8 sind noch elektrische Umschalter 10 und 11 zugeordnet, die das Gerät elektrisch auf schnellen Vorlauf oder schnellen Rücklauf umschalten.

Beim Eindrücken der Tastenstangen 7 und 8 zum Zwecke der Ausführung der Einzelfunktionen werden die Tastenstangen 7 und 8 um Hebwege 12 und 13 eingedrückt. Diese Hubwege sind beim Einzeleindrücken klar begrenzt. Werden beide Drucktastenstangen 7 und 8 gemeinsam eingedrückt, dann kann sich an die Einzelhubwege 12 und 13 ein gemeinsamer Überhubweg 14 anschließen. Beim Ausführen des Überhubweges 14 läßt sich dann eine dritte Funktion ausüben, die im Ausführungsbeispiel mechanischer Art ist. Es sind aber selbstverständlich auch weitere elektrische Funktionen anhängbar. Die mechanische Funktion des Überhubweges 14 besteht darin, einen Kassettenschacht 15 in eine Auswerfstellung anzuheben. Außerdem muß sichergestellt sein, daß die beiden Tastenstangen 7 und 8 nach dem Lösen einer Verriegelung am Ende des Überhubweges in ihre Ausgangsstellungen zurückkehren und nicht am Ende des Hubweges in Hubstellung verrasten.

Im folgenden wird nun die Funktion des Tastenstangenmechanismus im einzelnen erläutert. Die Tastenstangen 7 und 8 werden mit Hilfe von Zugfedern 17 und 19 in Richtung auf die Ausgangsstellung belastet. An einem nur schematisch dargestellten Chassisteil 21 ist eine Klinke 23 um eine Achse 24 drehbar gelagert. Diese Klinke 23 wird mit Hilfe einer Zugfeder 25 im Uhrzeigersinn vorgespannt. An der Klinke sind zwei Fahrstifte 27 und 29 angeordnet. Diese Fahrstifte 27 und 29 fahren eine Leitkontur 31 ab. Die Leitkonturen beider Tastenstangen 7 und 8 sind identisch und liegen, wenn die Tastenstangen nicht unabhängig voneinander verschoben sind, deckend übereinander. Die Leitkontur 31 besteht aus zwei in Einschubrichtung verlaufenden Teilstücken 33a und 33b, zwischen denen sich eine Einbuchtung 35 befindet. In der in der Fig. 1 dargestellten Ausgangsstellung liegt der Fahrstift 27 an dem Teilstück 33a der Leitkontur 31 an. Der Fahrstift 29 befindet sich berührungsfrei am Rande der Ausbuchtung 35.

Außer der Leitkontur am Rande der Ausnehmungen 37 ist noch eine Abhebekontur 39 vorgesehen, die auch für beide Tastenstangen identisch ist, wenn keine der Tastenstangen einzeln verschoben ist. An dieser Abhebekontur rollt sich die Mitnehmerrolle 9 ab. Der Abhebekontur 39 liegt eine wieder beiden Tastenstangen identische Anschlagkante 41 gegenüber.

Wird eine der Tastenstangen, beispielsweise die Tastenstange 8, über die Drucktaste 5 eingedrückt, dann wird die Mitnehmerrolle 9 von der Abhebekontur 39 der eingedrückten Tastenstange in Richtung auf die Anschlagkante 41 verschoben. Die Mitnehmerrolle 9 nimmt dann über einen Ausleger 43 den Tonkopfschieber 45 entgegen der Wirkung einer Zugfeder 47 mit. Wenn die Mitnehmerrolle 9 an die Anschlagkante 41 angestoßen ist, ist das Ende des Hubweges 13 erreicht. Der Fahrstift 27 befindet sich noch auf dem Teilstück 33a der Leitkontur 31. Beim Einschieben der Tastenstange 8 wurde zugleich der Schalter 11 für schnellen Rücklauf betätigt. Beim Loslassen der Taste 5 kehrt die Tastenstange 8 wieder in ihre Ausgangsstellung zurück.

Werden beide Tastenstangen 7 und 8 gemeinsam eingedrückt, dann durchfahren sie zunächst die ihnen gemeinsamen Hubwege 12 und 13. Die Mitnehmerrolle 9 fährt wieder auf der Abhebekontur 39 entlang. Da nun aber beide Tastenstangen 7 und 8 eingeschoben werden, wandern auch beide Anschlagkanten 41 in Einschubrichtung mit. Damit stellen diese Anschlagkanten 41 keine Bewegungsbegrenzung mehr dar. Die Mitnehmerrolle 9 kann vielmehr an den Anschlagkanten 41 vorbei auf die Verlängerung 49 der Schiebekontur 39 auflaufen. Der Fahrstift 27 läuft in die Ausbuchtung 35 ein, und der Fahrstift 29 kippt hoch, so daß ein weiterer Einschub bis zum Ende des Überhubweges 14 möglich wird. Am Ende dieses Überhubweges verrastet ein Rasthebel 51 in Rastausnehmungen 53 der Tastenstangen 3 und 5.

An der Tastenstange 8 ist eine Auflauffläche 55 vorgesehen. Diese Auflauffläche 55 stößt beim Eindrücken beider Tastenstangen 7 und 8 im Bereich des Überhubweges auf einen Schiebzapfen 57 an einem Schwenkhebel 59 des Kassettenschachtes 15. Dieser um eine Achse 61 schwenkbare Schwenkhebel drückt mit Schwenknasen 63 gegen die Oberseite 65 des Kassettenschachtes 15. Der Schwenkhebel 15, der mittels einer Feder 67 im Uhrzeigersinn drehend vorgespannt ist, drückt mit seinen Schwenknasen 63 den Kassettenschacht 15 in der Ruhestellung nach unten. Läuft der Schiebezapfen 57 jedoch auf die Auflauffläche 55 beim Einschieben im Überhubweg 14 auf, dann heben sich die Schwenknasen 63 an. Der Kassettenschacht 15 folgt dieser Aufwärtsbewegung unter der Wirkung einer vorspannenden Feder 69. In der angehobenen Stellung des Kassettenschachtes 15 kann ein Kassettenwechsel vorgenommen werden. Durch Lösen des mittels einer Feder 71 vorgespannten Rasthebels kehren beide Tastenstangen 7 und 8 in ihre Ausgangsstellung an der Linie 73 zurück. Für eine gemeinsame Rückkehr bis zur Linie 73 sorgt ein Zwischenschieber 75.

Es muß sichergestellt sein, daß die Tastenstangen 7 und 8 nur in der vorgesehenen Verschieberichtung beweglich sind. Hierzu dient eine Schiebeführung 76. Der Zwischenschieber 75 ist mit einem Leitstift 77 versehen, der nach oben und unten greift. Der obere Teil 79 des Leitstiftes greift in ein Langloch 81 der Tastenstange 7, und der untere Teil 83 des Leitstiftes 77 durchgreift zunächst einen Riegelschieber 85 und dann noch ein chassisfestes Leitstück 87 im Bereich einer Schlitzführung 89. An der Tastenstange 7 ist ein als Riegelansatz dienender Führungsstift 91 vorgesehen, der in ein Langloch 93 des Riegelschiebers 85 eingreift. Ein zweiter Führungsstift 95 der Tastenstange 8 greift in ein dem Langloch 93 entsprechendes Langloch 97 des Riegelschiebers 85. Zwischen dem Langloch 93 und der Tastenstange 7 ist der Führungsstift 91 noch durch ein Langloch 99 des Zwischenschiebers hindurchgeführt.

Die Langlöcher 93 und 97 sind mit Riegelnasen 101, 103 versehen. In Einschubrichtung hinter diesen Riegelnasen befindliche Rastbuchten 105 dienen der Verriegelung der einzelnen Tastenstangen am Ende der Hubwege 12 und 13. Der Leitstift 77 greift zwischen den Zwischenschieber 75 und dem Leitstück 87 durch eine Leitausnehmung 107 des Riegelschiebers 85. Diese Leitausnehmung ist mit einer Lösekontur 109 versehen, die mit dem Leitstift 83 zusammenwirkt.

Wird eine der Tastenstangen 7 und 8 für sich allein um die Länge des Hubweges 12 oder 13 eingeschoben, dann laufen die Führungsstifte 91 bzw. 95 unter einer Verschiebung des Riegelschiebers in Richtung eines Pfeiles 111 entgegen der Wirkung einer vorspannenden Feder 113 um die Riegelnasen 101 oder 103 herum und verrasten in den Rastbuchten 105. Durch erneutes Verschieben des Riegelschiebers 85 in Richtung des Pfeiles 111 wird der verrastete Führungsstift wieder gelöst, und die Tastenstange kehrt in ihre Ausgangsstellung zurück.

Werden beide Drucktasten 3 und 5 gemeinsam eingedrückt, dann läuft der Führungsstift 91 in dem Langloch 99 des Zwischenschiebers 55 zunächst vom äußeren Langlochende 113 zum inneren Langlochende 115. Dies entspricht den Hubwegen 112 oder 113. Im Bereich dieser Hubwege wird der Zwischenschieber 75 nicht bewegt. Beim weiteren gemeinsamen Eindrücken der Tastenstangen 7 und 8 nimmt der Führungsstift 91 über das innere Ende 115 den Zwischenschieber auf dem Hubweg mit. Der Leitstift 77 schiebt über die Leitkontur 109 den Riegelschieber 85 in Richtung des Pfeiles 11 beiseite, und der Leitstift 77 dringt in einen schmalen Endteil 115 der Leitausnehmung 107 ein. In diesen schmalen Endteil ist der Leitstift durch Aufrauhen der Oberfläche oder Einbringen einer Reibfläche unter verstärkter Reibung gebremst gehalten. Am Ende des Überhubweges 14 befindet sich das obere Endstück 79 des Leitstiftes 77 am äußeren Ende 117 des Langloches 81 in des Tastenstange 7.

Eine gemeinsame Rückkehr der Tastenstangen 7 und 8 in die Ausgangsstellung an der Linie 73 wird nun nach dem Lösen des Rasthebels 51 mit Hilfe des Zwischenschiebers bewirkt. Beim Auswärtsfahren der Tastenstangen 7 und 8 gleiten zunächst der Führungsstift 91 in dem Langloch 99 und das obere Ende 79 des Leitstiftes 77 in dem Langloch 81 entlang. Der Riegelschieber ist in seiner Lösestellung 111 mit Hilfe des Leitstiftes 77 festgehalten, da der Leitstift 77 im schmalen Teil 115 der Leitausnehmung 107 haftet und die Auswärtsbewegung zunächst nicht mitmacht. Da der Riegelschieber 85 in der Lösestellung gehalten wird, können die Führungsstifte 91 und 95 an den Rastbuchten 105 und an den Rastnasen 101 und 103 vorbeilaufen. Nach dem Passieren der Rastnasen 101 und 103 läuft der Führungsstift 91 auf das äußere Ende 115 des Langloches 99 im Zwischenschieber 75 auf. Der Zwischenschieber wird mithin von dem Führungsstift 91 mitgenommen und aus dem schmalen Teil 115 der Leitkontur herausgezogen. Der Riegelschieber 85 wird damit gelöst und kehrt in Richtung eines Pfeiles 119 in die Riegelstellung zurück. Am Ende der Ausfahrbewegung befinden sich die Tasten 3 und 5 wieder an der Linie 73, und die Tastenstangen 7 und 8 sind ausgerückt.

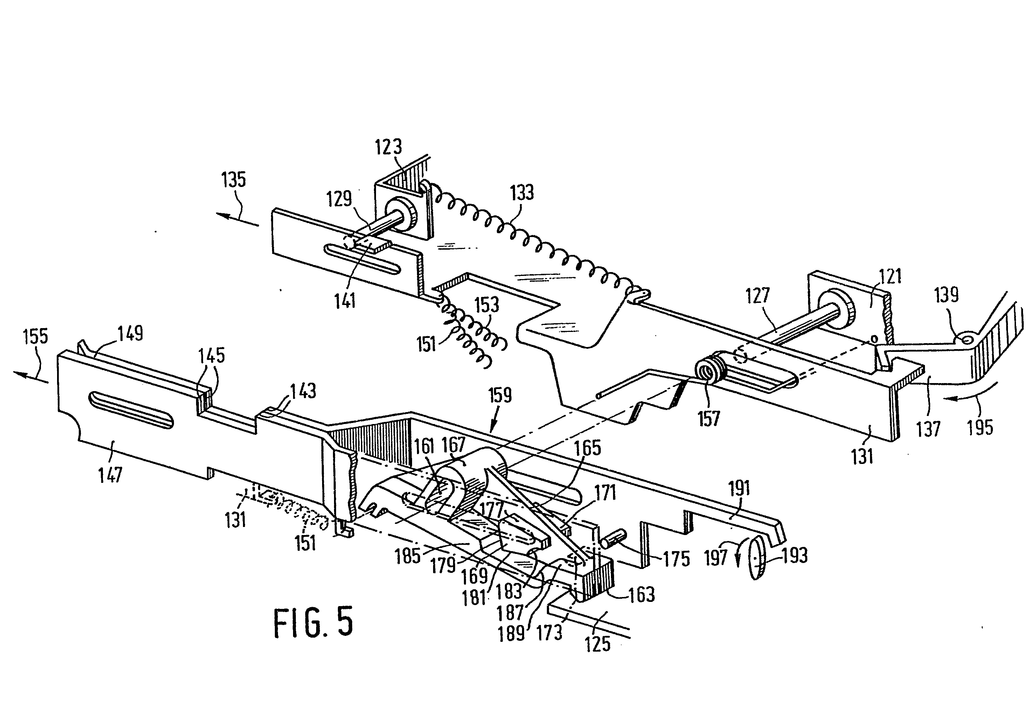

Von der zweiten Ausführungsform eines erfindungsgemäßen Gerätes sind in Fig. 5 nur die für die Erfindung relevanten Teile dargestellt. Das Gerät umfaßt Chassisteile 121, 123 und 125, wobei die Teile 121 und 123 je einen Führungsstift 127 bzw. 129 aufweisen. Die Stifte führen einen geradlinig beweglichen Steuerbügel 131, zum Steuern eines nicht dargestellten Kopfschiebers mit einem Magnetkopf und mit einer Druckrolle, wobei eine Zugfeder 133 den Bügel in Richtung des Pfeiles 135 zu bewegen versucht. Bei der in Fig. 5 dargestellten Ruhestellung des Gerätes liegt der Steuerbügel verriegelt entgegen der Kraft der Feder 133 hinter einem Auswurfbügel 137, der um eine Achse 139 drehbar ist.

Der Steuerbügel 131 ist im vorderen Bereich des Gerätes mit einer herausragenden Zunge 141 versehen, deren freies Endes mit Stehrändern 143 und 145 der Tastenbügel 147 und 149 zusammenarbeitet, die je auf nicht dargestellte Art und Weise in der Nähe des in Fig. 5 linken Endes eine Bedienungstaste aufweisen. In Fig. 5 liegt die Zunge an den Rändern 143 unter dem Einfluß der Wirkung der Zugfedern 151 bzw. 153 an, welche Federn zwischen dem Steuerbügel 131 und den Bügeln 147 bzw. 149 liegen und diese Bügel in Richtung eines Pfeiles 155 parallel zu dem Pfeil 135 zu bewegen versuchen. Um den Führungsstift 127 liegen Wicklungen einer Scharnierfeder 157, deren einer Schenkel mit dem Ende durch eine Öffnung in dem Chassisteil 121 gesteckt liegt und deren anderer Schenkel mit dem Ende in einem Schlitz einer Klinke 159 liegt. Die Klinke 159 im hinteren Bereich des Gerätes liegt in dem Raum zwischen den Tastenbügeln 147 und 149 und umfaßt ein Schlitzloch 161, in dem ein Endteil des Stiftes 127 liegt. Die Klinke 159 umfaßt an dem in Fig. 5 rechten Ende eine Nase 163, mit der durch die Wirkung der Feder 157 die Klinke gegen den Chassisteil 125 drückt. Dabei drückt in Ruhestellung des Gerätes der Stift 127 gegen den unteren Teil des Schlitzloches 161.

Die Klinke 159, die vorzugsweise im Spritzgußverfahren aus Kunststoff, wie Polyacetal, hergestellt ist, umfaßt eine Mittelwand 165, die sich zwischen der Nase 163 und einem erhöhten Teil 167, in dem das Schlitzloch 161 vorhanden ist, erstreckt und welcher Wand parallel zu den benachbarten Teilen der Bügel 147 und 149 liegt. Spiegelsymmetrisch angeordnet sind auf beiden Seiten der Mittelwand auf der Klinke 159 Nocken 169 und 171, die mit Fahrstiften 173 und 175 zusammenarbeiten können, die auf den einander zugewandten Seiten der Bügel 147 bzw. 149 derart befestigt sind, daß die Längsachsen der Stifte zusammenfallen. Die Nocken sind am Umfang mit je einer Umlaufkontur versehen für den zugeordneten Stift. Auf diese Weise umfaßt der Nocken 169, gesehen in der Lage nach Fig. 5, eine, von der Linken Seite gesehen, flache, schräg abwärts sich erstreckende, obere Wand 177, eine flache, sich schräg abwärts erstreckende Seitenwand 179, eine flache, untere Wand 181 und eine über etwa eine halbe Zylinderfläche sich erstreckende, einen Hohlraum begrenzende Seitenwand 183. Die Klinke 159 umfaßt unter den Nocken 169 und 171 einen Basisteil 185, der mit den benachbarten Führungsflächen 179, 181 und 183 einen Durchlaßspalt für den Stift begrenzt und welcher Teil eine stehende Anschlagkontur 187 umfaßt. Alle Konturen 177, 179, 181, 183 und 189 bilden zusammen die Leitkonturen für die Fahrstifte. In der in Fig. 5 dargestellten Stellung liegen die Stifte 173 und 175 über einer sich schräg aufwärts erstreckenden Auflauffläche 189 des Basisteils 185.

Der Tastenbügel 149 umfaßt einen frei herausragenden Haken 191, der mit einem elektrischen Schalter zusammenarbeiten kann, von dem in Fig. 5 ein schwenkbarer Schaltnocken 193 in Ruhestellung des Gerätes von dem Haken 191 frei liegt.

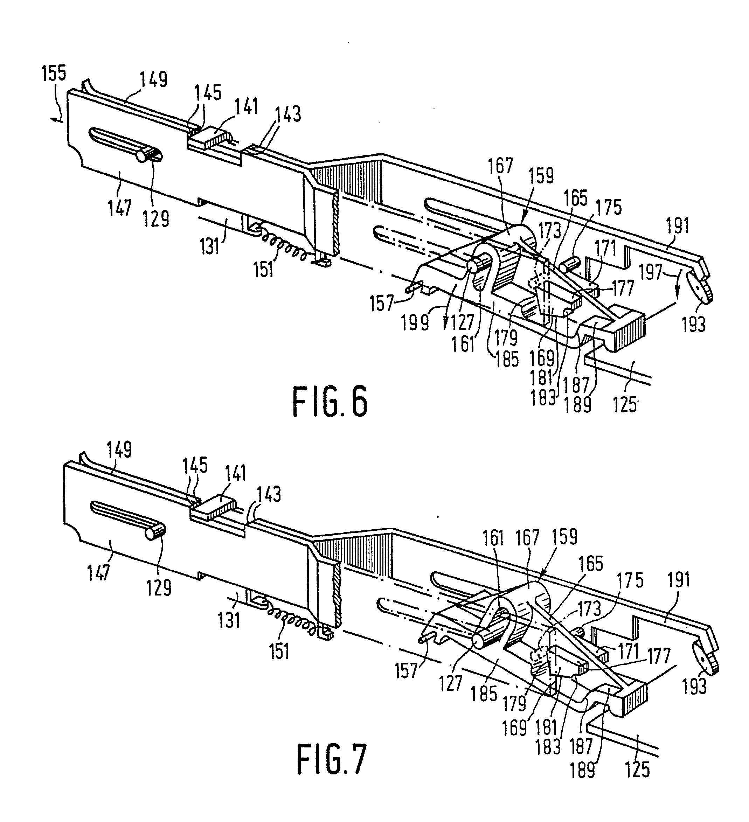

Wenn eine Magnetbandkassette in das Gerät eingeschoben wird, wird durch die Kassette der Auswurfbügel 137 um die Schwenkachse 139 entsprechend einem Pfeil 195 in Fig. 5 geschwenkt, wodurch der Steuerbügel 131 entriegelt wird und in Richtung des Pfeiles 135 nach links bewegt. Auf diese Weise bewegt sich auch die Zunge 141 auf dem Bügel 131 nach links, was dazu führt, daß die Zunge 141 gegen die Wände 145 stößt und darauf de beiden Bügel 147 und 149 gemäß Pfeil 155 gleichzeitig über einen gleichen Abstand nach links bewegen läßt. Während dieser Bewegung läßt der Haken 191 den Schaltnocken 193 entsprechend einem Pfeil 197 schwenken, während die beiden Stifte 173 und 175 über die oberen Flächen 177 der Nocken 169 bzw. 171 gleiten. Die Stifte drücken während dieser Gleitbewegung gegen die Nocken und lassen, wie in Fig. 6 dargestellt, die Klinke 159 um das an dem Chassisteil 125 anliegende Ende der Nase 163 entsprechend einem Pfeil 199 schwenken. Die am weitesten abwärts geschwenkte Lage der Klinke 159 ist deutlicher in Fig. 9 durch eine punktierte Linie dargestellt. Dabei wird die Feder 157 gespannt, und der Endteil des Stiftes 127 wird am anderen Ende des Schlitzloches 161 liegen. Sobald die Stifte 173 und 175 die oberen Flächen 177 passiert haben, drückt die Feder 157 die Klinke 159 wieder zurück bis in die Ansgangslage in Fig. 5, der auch die Stellung nach Fig. 7 entspricht.

Wie in fig. 7 dargestellt, liegen in der Abspielstellung des Gerätes die Stifte 173 und 175 in einem gewissen Abstand links von den Seitenwänden 179, während der Schaltnocken 193 eine Endstellung einnimmt, in der ein nicht dargestellter Antriebsmotor zum Antreiben des Gerätes an die dem Spielbetrieb angepaßte elektrische Spannung angeschlossen ist.

Während der Bewegung der Bügel 147 und 149 in die Abspielstellung hat der Steuerbügel 131 den nicht dargestellten Kopfschieber verschoben und den Antrieb des Gerätes mit den Wickelkernen der Kassette gekuppelt.

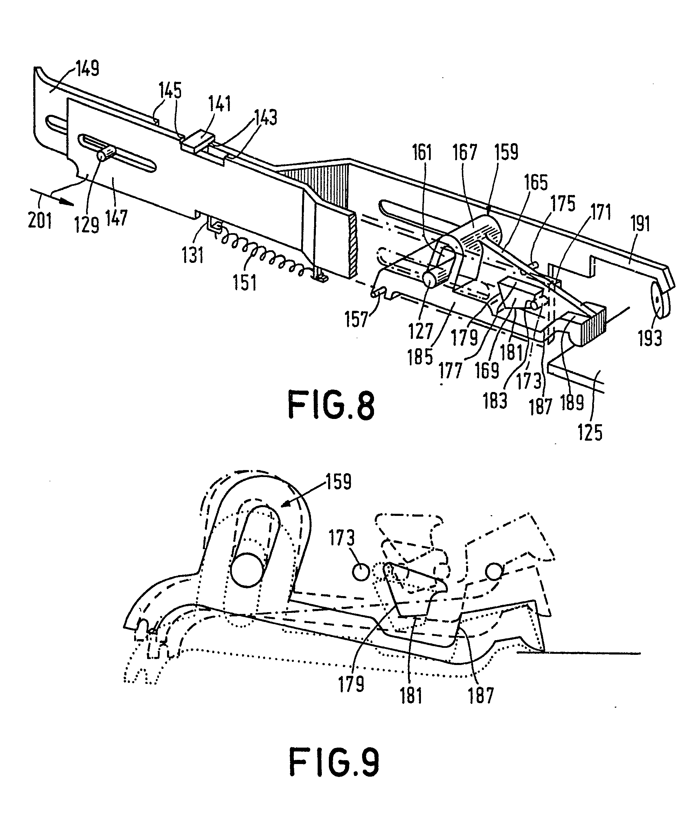

Wenn, wie in Fig. 8 dargestellt, aus der Abspielstellung des Gerätes der Bügel 147 eingedrückt wird, und zwar in Richtung eines Pfeiles 201, wird die Zunge 141 mitgenommen. Daraufhin drückt die Zunge 141 gegen den Rand 143 des Bügels 149, wodurch dieser über einen gegenüber der Verschiebung des Bügels 147 relativ kurzen Abstand mitgenommen wird. Die Verschiebung des Bügels 147 führt dazu, daß der Stift 173 längs der Seitenwand 179 gleitet und die Klinke 159 um den Führungsstift 127 schwenken läßt, bis die Nase 163 eine höchste Schwenklage einnimmt, die in Fig. 9 durch eine strichpunktierte Linie dargestellt ist. Daraufhin gleitet der Stift 173 längs der unteren Wand 181. Dadurch, daß der Stift 175 durch die geringe Verschiebung des Bügels 149 bis an die Seitenwand 179 bewegt ist und gegen dieselbe drückt, kann nun die Klinke, nachdem der Stift 173 die untere Wand 181 passiert hat, noch nicht zurückschwenken. Die Folge davon ist, daß der Stift 173 an die Anschlagkontur 187 stößt, so daß sich der Bügel 147 nicht weiter bewegen kann. Dabei zieht die Feder 151 den Bügel 147 etwas zurück, wodurch der Stift 173 in den durch die Seitenwand 183 begrenzten Hohlraum gelangt und der Bügel 147 verriegelt wird. Auf diese Weise bestimmt die Seitenwand 183 eine Raststellung der Klinke. Die Nase 163 liegt in Fig. 9 gestrichelt in der Schwenklage der Klinke frei von dem Chassisteil 125. Die Bewegung des Bügels 149 hat dazu geführt, daß der Schaltnocken 193 bis in eine Zwischenlage zurückgeschwenkt ist, wodurch der Antriebsmotor elektrisch an eine erhöhte Spannung angeschlossen ist und der Antrieb in dieser schneller-Vorlaufstellung schneller dreht als in der Spielstellung nach Fig. 7.

Die Bewegung der Zunge 141 hat eine geringe Verschiebung des Kopfschiebers verursacht, wodurch die Druckrolle sich von dem Magnetband löst und der schnelle Vorlauf unbehindert erfolgen kann. Die Bewegung der Zunge 141 ist jedoch derart gering, daß der Steuerbügel 131 die Stellung des Auswurfbügels 137 nicht beeinflußt.

Wenn daraufhin der Bügel 149 eingedrückt wird, läßt der Stift 175 die Klinke 159 abermals aufwärts schwenken bis in die in Fig. 9 dargestellte höchste Schwenklage, was eine Entriegelung des Stiftes 173 und damit des Bügels 147 ergibt. Der Bügel 147 wird durch die Feder 151 zurückbewegt, wodurch nun der Stift 173 an der Seitenwand 179 anliegt, während der Stift 175 eine Bewegung macht, entsprechend der Bewegung des Stiftes 173 beim Eindrücken des Bügels 147. Die weitere Verschiebung des Bügels 149 führt dazu, daß der Schaltnocken 193 noch etwas weiter zurückschwenkt, jedoch auch in dieser Stellung ist der Antriebsmotor noch immer an die erhöhte Spannung angeschlossen. Auf nicht dargestellte Weise wird der Antrieb des Gerätes in ihrer Drehrichtung umgekehrt, wodurch nun der schnelle Rücklauf stattfinden kann.

Beim gleichzeitigen Eindrücken beider Bügel 147 und 149 führt die Klinke 159 eine Anzahl Bewegungen durch, wie diese in Fig. 9 dargestellt sind. Ausgegangen ist von der Abspielstellung des Gerätes gemäß Fig. 7. Auch ist es möglich, aus der schneller-Vorlauf- bzw. Rücklaufstellung die beiden Bügel einzudrücken. Jetzt, wo die beiden Stifte 173 und 175 längs der Wände 179 und 181 de Nocken 169 und 171 gleiten, erfolgt zunächst ein Aufwärtsschwenken der Klinke 159 bis in die höchste Schwenklage, die in Fig. 9 durch eine strichpunktierte Linie angegeben ist, aber unmittelbar nach dem Passieren der unteren Wände 181 läßt sich die Feder 157 die Klinke um den Stift 127 zurückschwenken. In Fig. 9 ist durch eine gestrichelte Linie eine Zwischenlage der Klinke 159 und des Stiftes 173 dargestellt, entsprechend der Rast-Schwenklage beim schnellen Vorlauf. Der Unterschied ist nun jedoch, daß beim weiter nach rechts Bewegen der Stifte 173 und 175 die Anschlagkontur 187 nicht störend wird und ein ungehemmtes Weiterbewegen stattfinden kann. Die Klinke ist inzwischen bis in die Ausgangslage zurückgekehrt, und die Stifte 173 und 175 bewegen sich in die rechteste Stellung in Fig. 9. Auf nicht dargestellte Weise sind die Zunge 141 und damit der Steuerbügel 131 durch die Bügel 147 und 149 unter Abheben des Kopfschiebers und Entkuppeln des Antriebes der Kassette mitgenommen bis in eine Lage, in der der Auswurfhebel 137 zurückschwenkt, die Kassette ausgeworfen wird und der Bügel 131 abermals wie in Fig. 5 verriegelt wird. Der Schaltnocken 193 ist bis in die Stellung nach Fig. 5, in der der Motor ausgeschaltet ist, zurückgeschwenkt. Nachdem letzten Endes die Bügel unter dem Einfluß der Federn 151 und 153 über den kurzen Abstand nach links bewegen, wobei die Zunge 141 an den Rändern 143 anliegt, ist die Ruhelage des Gerätes nach Fig. 5 wieder erreicht.

## Ansprüche

1. Magnetbandkassettengerät mit mindestens zwei Drucktasten (3, 5), die beim Eindrücken ihrer sich überdeckenden Tastenstangen (7, 8) über die Länge eines Hubweges (12, 13) für Einzelfunktion zugeordneter Geräteteile unterschiedliche Einzelfunktionen ausüben und verriegelbar sind, und mit einer eine Kassette aufnehmenden Kassettenaufnahme (15), aus der die Kassette auswerfbar ist durch gemeinsames Eindrücken beider Drucktasten (3, 5) wozu eine Klinke (23), die bei Einzelfunktion die jeweils eingedrückte Drucktaster (3 bzw. 5) verriegelt, bei gemeinsamem Eindrücken verschwenkt wird zum Ausüben einer dritten Funktion, dadurch gekennzeichnet, daß

— zur Funktionsübertragung zwischen den Tastenstangen (7, 8) und dem Geräteteil wenigstens ein Fahrstift (27 bzw. 29) und Leitkonturen (31) vorgesehen sind,

— beim Verschieben der Tastenstangen (7, 8) durch das Abtasten der Leitkonturen (31) mittels des Fahrstiftes die Klinke (23) verschwenkt wird,

— die Klinke (23) beim Eindrücken einer Drucktaste (3, 5) zum Ausführen einer Einzelfunktion den Hubweg (12, 13) der betreffenden Tastenstange (7, 8) beschränkt und bei gemeinsamem Einschieben beider Tastenstangen (7, 8) derartig von Leitkonturen (31) verschwenkt wird, daß die Tastenstangen (7, 8) einen gemeinsamen Überhubweg (14) durchfahren können.

2. Magnetbandkassettengerät nach Anspruch 1, dadurch gekennzeichnet, daß

— die Leitkonturen (31) mit Ausbuchtungen (35) versehen sind, die beim Einzelverschieben der Tastenstangen (7, 8) von den in einer Linie beiderseits der Ausbuchtungen befindlichen Teilstücken (33a, 33b) verschlossen sind,

— einer der Fahrstifte (27) bei gemeinsamem Verschieben der Tastenstangen (7, 8) in die geöffneten Ausbuchtungen (35) einläuft, wodurch die vorgespannte Klinke (23) verschwenkt zur Freigabe eines längeren gemeinsamen Überhubweges (14) beider Tastenstangen (7, 8).

3. Magnetbandkassettengerät nach Anspruch 2, dadurch gekennzeichnet, daß beide Leitkonturen (31) mit Anschlagkanten (41) versehen sind, auf die eine Mitnehmerrolle (9) aufläuft, wenn diese beim Einzelverschieben einer Tastenstange (7, 8) auf die Anschlagkante der unverstellten Tastenstange (7, 8) aufläuft.

4. Magnetbandkassettengerät nach Anspruch 2, dadurch gekennzeichnet, daß eine der Tastenstange (8) mit einer Auflauffläche (55) versehen ist, die einen den Kassettenschacht (15) anhebenden und absenkenden Schiebezapfen (57) beaufschlagt beim Durchfahren des Überhubweges (14).

5. Magnetbandkassettengerät nach Anspruch 1, dadurch gekennzeichnet, daß die Klinke (185) mit deckungsgleichen Leitkonturen (177-187) versehen ist, die von an den Tastenstangen (147, 149) angeordneten Fahrstiften (173, 175) verschwenkt werden.

6. Magnetbandkassettengerät nach Anspruch 5, dadurch gekennzeichnet, daß die deckungsgleich nebeneinander angeordneten Leitkonturen (177-187) mittels einer Klinkenmittelwand (165) getrennt sind und die an den Tastenstangen (147, 149) angeordneten Fahrstifte (173, 175) gegeneinanderweisend in den Bereich der ihnen zugeordneten Leitkonturen (177-183) eingreifen.

7. Magnetbandkassettengerät nach Anspruch 6, dadurch gekennzeichnet, daß die Leitkonturen (177-187) jeweils aus einer von den Fahrstiften (173, 175) umfahrbaren, mit Raststellung versehenen Umlaufkontur (177-183) und einer getrennten Anschlagkontur (187) bestehen, gegen letztere der jeweilige Fährstift (173, 175) einer einzeln eingedrückten Tastenstange (147, 149) anschlägt vor dem Zurückfallen in die Raststellung der Umlaufkontur (177-173) und zwischen der und der Umlaufkontur (177-183) beide Fahrstifte (173, 175) hindurchfahren in den Überhubweg hinein, wenn beide Tastenstangen (147, 149) gemeinsam eingedrückt werden.

8. Magnetbandkassettengerät nach Anspruch 7, dadurch gekennzeichnet, daß die Umlaufkontur (177-183) mit einer schrägen Auflauffläche (179) versehen ist, gegen die ein aus seiner Ruhestellung eingedrückter Fahrstift (173 bzw. 175) aufläuft und dadurch die Klinke (185) derart verschwenkt, daß der andere Fahrstift (175 bzw. 173) aus seiner Raststellung herausläuft.

**Claims**

1. A magnetic-tape-cassette apparatus which comprises at least two push-buttons (3, 5), which, when their superimposed push-button rods (7, 8) are pushed-in through a travel (12, 13) for individual functions of associated apparatus parts, perform different individual functions and can be latched, and a cassette holder (15) for receiving a cassette, which cassette can be ejected by the simultaneous depression of the two push-buttons (3, 5), for which purpose a catch (23), which in the case of the individual functions latches the instantaneously depressed push-button (3 or 5), is pivoted in order to perform a third function upon simultaneous depression, characterized in that

— for the function transmission between the push-button rods (7, 8) and the apparatus part there are provided at least one follower pin (27 or 29) and guide contour (31),

— during the displacement of the push-button rods (7, 8) the catch (23) is pivoted when the follower pin follows the guide contour (31)

— upon depression of a push-button (3, 5), in order to perform an individual function, the catch (23) limits the travel (12, 13) of the relevant push-button rod (7, 8) and upon the simultaneous actuation of the two push-botton rods (7, 8) the catch is pivoted by the guide contour (31) in such a way that the push-button rods (7, 8) can move through a common overtravel path (14).

2. A magnetic-tape-cassette apparatus as claimed in Claim 1, characterized in that

— the guide contours (31) have receding portions (35), which during individual actuation of the push-button rods (7, 8) are closed by the portions (33a, 33b) disposed in line with the receding portions on both sides,

— upon simultaneous actuation of the push-button rods (7, 8) one of the follower pins (27) runs into the opened receding portions (35), so that the spring-loaded catch (23) is pivoted to provide a longer common overtravel path (14) for the two push-button rods (7, 8).

3. A magnetic-tape-cassette apparatus as claimed in Claim 2, characterized in that the two guide contours (31) have stop edges (41) against which an actuating roller (9) abuts, when in the case of separate actuations of a push-button rod (7, 8) it strikes against the stop edge of the non-actuated push-button rod (7, 8).

4. A magnetic-tape-cassette apparatus as claimed in Claim 2, characterized in that one of the push-button rods (8) has a run-on surface (55), which actuates a slide pin (57) which raises and lowers the cassette holder (15) during passage through the overtravel path (14).

5. A magnetic-tape-cassette apparatus as claimed in Claim 1, characterized in that the catch (185) is formed with coincident identical guide contours (177-178), which are pivoted by follower pins (173, 175) arranged on the push-button rods (147, 149).

6. A magnetic-tape-cassette apparatus as claimed in Claim 5, characterized in that the coincident adjacent guide contours (177-178) are spaced from each other by a central catch wall (165), and the follower pins (173, 175) which are arranged on the push-button rods (147, 149) and which extend in opposite directions engage the associated guide contours (177-183).

7. A magnetic-tape-cassette apparatus as claimed in Claim 6, characterized in that the guide contours (177-187) each comprise a circumferential contour (177-183), which can be scanned by the follower pins (173, 175) and which provides a latched position, and a separate stop contour (187) against which the relevant follower pin (173, 175) of a separately actuated push-button rod (147, 149) abuts before it resumes the latched position in the circumferential contour (177-173), the two follower pins (173, 175) passing between the stop contour and the circumferential contour (177-183) into the overtravel path when the two push-button rods (147-149) are actuated simultaneously.

8. A magnetic-tape-cassette apparatus as claimed in Claim 7, characterized in that the circumferential contour (177-183) comprises an inclined run-on surface (179), onto which a follower pin (173 or 175), which has been pressed out of its rest position, runs and thereby pivots the catch (185) in such a way that the other follower pin (175 or 173), is moved out of its latched position.

## Revendications

1. Appareil à cassette de bande magnétique comportant au moins deux touches (3, 5) qui, lorsque leurs tiges (7, 8) qui se chevauchent sont enfoncées de la longueur d'une course (12, 13) pour le fonctionnement individuel de parties associées de l'appareil, exécutent des fonctions individuelles différentes et peuvent être verrouillées, et un magasin (15) recevant une cassette, duquel la cassette peut être éjectée par l'enfoncement commun des deux touches (3, 5), auxquelles fins un cliquet (23), qui, dans le cas du fonctionnement individuel, verrouille chaque fois la touche enfoncée (3 ou 5), est amené à pivoter dans le cas d'un enfoncement commun pour exécuter une troisième fonction, caractérisé en ce que :
— pour la transmission de fonction entre les tiges (7, 8) des touches et la partie de l'appareil, au moins un doigt de guidage (27, 29) et des contours de guidage (31) sont prévus,
— lors du déplacement des tiges des touches, le passage du doigt de guidage sur les contours de guidage (31) fait pivoter le cliquet (23),
— lorsqu'une touche (3, 5) est enfoncée pour l'exécution d'une fonction individuelle, le cliquet (23) limite la course (12, 13) de la tige de touche (7, 8) en question et lorsque les deux tiges de touches (7, 8) sont enfoncées ensemble, le cliquet pivote à l'intervention des contours de guidage (31) d'une manière telle que les tiges des touches (7, 8) puissent effectuer une course supplémentaire (14) commune.

2. Appareil à cassette de bande magnétique suivant la revendication 1, caractérisé en ce que :
— les contours de guidage (31) sont pourvus de creux arrondis (35) qui, lorsque les tiges des touches (7, 8) sont déplacées individuellement, sont fermés par les pièces (33a, 33b) se trouvant en ligne de part et d'autre des creux arrondis,
— un des doigts de guidage (27), lors d'un déplacement commun des tiges de touches (7, 8), s'engage dans les creux ouverts (35), de sorte que le cliquet présollicité (23) pivote pour libérer une course supplémentaire commune (14) plus longue des deux tiges de touches (7, 8).

3. Appareil à cassette de bande magnétique suivant la revendication 2, caractérisé en ce que les deux contours de guidage (31) sont pourvus de bords de butée (41) sur lesquels roule un galet entraîneur (9), lorsque lors du déplacement individuel d'une tige de touche (7, 8), ce galet rencontre sur le bord de butée de la tige de touche (7, 8) qui n'est pas déplacée.

4. Appareil à cassette de bande magnétique suivant la revendication 2, caractérisé en ce qu'une des tiges de touches (8) est pourvue d'une surface formant rampe (55) qui attaque un toc de déplacement (57) soulevant et abaissant le magasin à cassette (15) lors du parcours de la course supplémentaire (14).

5. Appareil à cassette de bande magnétique suivant la revendication 1, caractérisé en ce que le cliquet (185) est pourvu de contours de guidage (177-187) coïncidants qui pivotent à l'intervention de doigts de guidage (173-175) montés sur les tiges de touches (147-149).

6. Appareil à cassette de bande magnétique suivant la revendication 5, caractérisé en ce que les contours de guidage coïncidants (177-187) disposés l'un à côté de l'autre sont séparés au moyen d'une paroi médiane de cliquet (165) et les doigts de guidage (173-175) montés sur les tiges de touches (147-149), opposés l'un à l'autre, s'engagent dans la zone des contours de guidage (177-183) qui leur sont associés.

7. Appareil à cassette de bande magnétique suivant la revendication 6, caractérisé en ce que les contours de guidage (177-187) sont formés chaque fois d'un contour de déplacement (177-183) pourvu d'une position d'arrêt et d'un contour de butée séparé (187) contre lequel le doigt de guidage (173-175) correspondant d'une tige de touche (147-149) enfoncée individuellement vient buter avant de revenir dans la position d'arrêt du contour de déplacement (177-173) et entre ce contour de butée et le contour de déplacement (177-183) passent les deux doigts de guidage (173-175) dans leur course supplémentaire lorsque les deux tiges de touches (147-149) sont enfoncées ensemble.

8. Appareil à cassette de bande magnétique suivant la revendication 7, caractérisé en ce que le contour de déplacement (177-183) est pourvu d'une surface de rampe oblique (179) sur laquelle monte un doigt de guidage (173 ou 175) enfoncé à partir de sa position de repos, le cliquet (185) pivotant alors d'une manière telle que l'autre doigt de guidage (175 ou 173) se dégage de sa position d'arrêt.

FIG.1

FIG.2

FIG.3

FIG.4

FIG. 5

0 052 393

FIG.6

FIG.7

4

FIG.8

FIG.9